# EUROPÄISCHE PATENTSCHRIFT

(11) **EP 2 317 338 B1**
(45) Veröffentlichungstag und Bekanntmachung des Hinweises auf die Patenterteilung: **26.12.2018**
(21) Anmeldenummer: 10188397.3
(22) Anmeldetag: 21.10.2010
(51) Int. Cl.: G01S 15/93, G01S 13/93, G01S 17/93

(54) **Verfahren zur Erkennung von Objekten mit geringer Höhe**
Method for recognising objects of low height
Procédé de reconnaissance d'objets ayant une hauteur réduite

(30) Priorität: 29.10.2009 DE 102009046158
(43) Veröffentlichungstag der Anmeldung: 04.05.2011
(73) Patentinhaber: Robert Bosch GmbH, 70442 Stuttgart (DE)
(72) Erfinder: Pampus, Christian, 71229 Leonberg (DE); Urban, Werner, 71665 Vaihingen/Enz (DE); Fehse, Meike, 71254 Ditzingen (DE); Herder, Bjoern, 70469 Stuttgart (DE); Knoblauch, Marco, 75417 Muehlacker (DE); Seifarth, Soenke, 71263 Weil Der Stadt (DE)

(56) Entgegenhaltungen:
- EP-A1- 1 643 271
- WO-A1-2008/102735
- DE-A1-102007 035 219
- DE-A1-102007 042 220
- DE-A1-102009 016 562
- US-A1- 2009 108 184

## Beschreibung

### Stand der Technik

Die Erfindung betrifft ein Verfahren zur Erkennung von Objekten mit geringer Höhe mit einem System zur Hinderniserkennung in Fahrzeugen, wobei das System zur Hinderniserkennung Abstandssensoren zur Ermittlung des Abstandes zu Objekten und Mittel zur Auswertung umfasst. Weiterhin betrifft die Erfindung ein Verfahren zur Unterstützung eines Fahrers eines Fahrzeugs bei einem Fahrmanöver.

Zur Unterstützung eines Fahrers eines Fahrzeugs bei unterschiedlichen Fahrmanövern sind verschiedene Fahrassistenzsystems bekannt. Insbesondere haben sich so genannte Einparkassistenzsysteme, die den Fahrer des Fahrzeugs beim Einparken unterstützen, durchgesetzt. Diese unterstützen den Fahrer des Fahrzeugs zum Beispiel dahingehend, dass bei Annäherung an Hindernisse eine akustische und/oder optische Warnung erfolgt. Hierzu weisen die Einparkassistenzsysteme im Allgemeinen Abstandssensoren auf, die im Frontbereich und im Heckbereich des Fahrzeugs angeordnet sind. Als Abstandssensoren werden zum Beispiel Ultraschallsensoren eingesetzt.

Zur Erfassung der Umgebung des Fahrzeugs und damit des Abstandes zu Hindernissen wird von den Ultraschallsensoren jeweils ein Schallimpuls gesendet und das Echo des Schallimpulses empfangen. Aus der Laufzeit zwischen Senden des Signals und Empfangen des Echos wird der Abstand zu einem den Schall reflektierenden Objekt berechnet. Dieser Abstand wird dem Fahrer üblicherweise über eine farbcodierte optische Anzeige, zum Beispiel durch mehrere LEDs mit unterschiedlicher Größe und/oder Farbe oder akustisch durch einen Intervallton mit bestimmter Frequenz und/oder Intensität dargestellt. Auch Kombinationen aus optischer und akustischer Anzeige sind üblich. Bei einer akustischen Darstellung nimmt üblicherweise mit abnehmendem Abstand zum Hindernis die Frequenz des Intervalltons und gegebenenfalls gleichzeitig die Lautstärke zu. Bei Unterschreitung eines für die Fahrzeugnavigation kritischen Abstandsbereiches erfolgt in der Regel eine Stoppwarnung für den Fahrer in Form eines Dauertons.

Bei Verwendung von Ultraschallsensoren wird das Signal in Form einer so genannten Schallkeule, die sich aus dem Abstrahlwinkel des Signals ergibt, gesendet. Aufgrund der Schallkeule können jedoch niedrige Hindernisse, beispielsweise Blumenkübel nicht in jeder Entfernung gesehen werden, da diese sich mit abnehmender Distanz in den Schatten des Ultraschalls bewegen. Insbesondere bei hohen Sensoreinbaupositionen können niedrige Objekte unter der Schallkeule durchtauchen ohne in den Vollwarnbereich zu gelangen und damit ohne eine Stoppwarnung zu generieren.

Ein System zur Hinderniserkennung mit Ultraschall ist zum Beispiel in US 5,574,426 beschrieben.

Neben Blumenkübeln und anderen ähnlichen Objekten werden auch Bordsteine als Hindernisse detektiert. Diese stellen üblicherweise jedoch kein direktes Hindernis dar, da sie ohne Schäden am Fahrzeug zu verursachen überfahren werden können. Da bei Parallelparklücken die seitliche Begrenzung jedoch üblicherweise durch Bordsteine gebildet wird, ist es für Einparkassistenzsysteme, die den Fahrer beim Einparken in solchen Parklücken unterstützen, notwendig, den Bordstein als seitliche Begrenzung zu detektieren.

Bei semi-automatischen oder vollautomatischen Einparkassistenzsystemen, bei denen zunächst während der Vorbeifahrt an einer Parklücke die Parklücke vermessen wird, entsprechend der Parklückengeometrie eine Einparktrajektorie berechnet wird und dem Fahrer Lenkhinweise zum Einfahren in die Parklücke gegeben werden oder aber Lenkeingriffe vollautomatisch übernommen werden, wird ein Bordstein, der eine niedrige Begrenzung darstellt, als Begrenzung der Parklücke erfasst. Bei den bekannten Systemen werden niedrige und hohe Begrenzungen gleich bewertet und die Einparktrajektorie wird so berechnet, dass ein Überfahren der Begrenzung nicht erfolgt. Bei einer niedrigen Begrenzung, beispielsweise einem Bordstein, dessen Höhe so gering ist, dass das Fahrzeug diesen überragen kann, könnte jedoch die Trajektorie anders berechnet werden, da bei einem Überfahren der niedrigen Begrenzung keine Kollision erzeugt wird. Da bei bekannten Systemen die Höhe eines begrenzenden Objektes nicht berücksichtigt wird, kann daher bei bekannten Systemen bei Parklücken mit niedriger Begrenzung nicht die optimale Einparktrajektorie berechnet werden. Zudem kann bei einer Parklücke mit einer niedrigen Begrenzung, zum Beispiel einem Bordstein das Fahrzeug dichter an der Begrenzung geparkt werden.

EP 1 643 271 A1 offenbart, dass beim Rückwärtsfahren (an das Hindernis heran) die Empfindlichkeit der Abstandssensoren in Stufen verringert wird, beispielsweise in Abhängigkeit vom zurückgelegten Weg. Zum Verringern der Empfindlichkeit werden Kennlinienparameter der Sensoren automatisch angepasst. Nach Unterschreiten einer bestimmten Amplitude des Echosignals, die einem vorgebbaren Schwellwert entspricht, wird ein Bordstein nicht mehr abgetastet, eine Wand jedoch. Hierbei ist das Ausbleiben eines Echos ein weiteres Klassfizierungsmerkmal für die Höhe eines Bordsteins. Damit wird aus dem Ausbleiben des Echos bei einer bestimmten Empfindlichkeit bzw. Sensorreichweite auf die Höhe des Hindernisses geschlossen. Ein bestimmter Abstand des Kfz vom Hindernis, bei dem das Hindernis verschwindet ist damit zur Höhenschätzung nicht nötig und wird nicht ausgewertet.

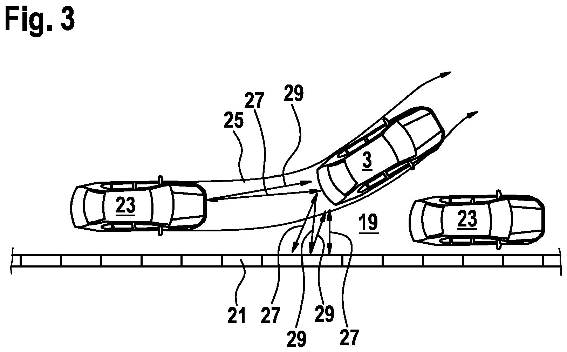

DE 10 2007 042220 A1 offenbart die Detektion einer nicht überfahrbaren Wand (Fig. 3A), eines überfahrbaren senkrechten Bordsteins (Fig. 3B) und eines überfahrbaren abgeschrägten Bordsteins (Fig. 3C). Die gestrichelte Kurve stellt eine errechnete Referenzkurve AV dar, wie sie für hohe, nicht überfahrbare Hindernisse erwartet wird. Die Entscheidung über die Überfahrbarkeit eines Objekts (also über dessen Höhe) wird durch Vergleich zwischen den tatsächlich gemessenen Kurven A (= durchgezogene Linien in Fig. 3A-C) und der für eine Wand (o.ä. nicht-überfahrbares Objekt) angenommene Referenzkurve AV (=gestrichelte Linien in Fig. 3A-C) herbeigeführt, indem festgestellt wird, dass es sich um ein überfahrbares Objekt handelt, wenn AV < A ist, oder wenn ein Maximum (wie bei der Detektion eines Randsteins) detektiert wurde. In Absatz [0035] wird im Kontext des senkrechten Randsteins in Fig.3B zudem das Prinzip des "Herausfallens aus dem Detektionsbereich" bei Annäherung beschrieben. Dort heißt es: "Ferner nimmt die Kenngröße A nur bis zu einem lokalen Maximum zu und fällt danach ab. Diese Abnahme der Kenngröße A ist durch die Form der Messkeule bedingt. Die Messkeule breitet sich kegelförmig vom Sensor 5 aus. Folglich kann der Sensor 5 Objekte, die sehr nahe am Fahrzeug sind, nur erfassen, wenn sie eine bestimmte Höhe aufweisen. Anders ausgedrückt, wenn der Sensor 5 sich zu nahe an einem niedrigen Objekt befindet, dann "schaut" der Sensor über das Objekt hinweg und kann es nicht mehr erfassen." Damit offenbart DE 10 2007 042220 A1 das physikalische Prinzip des "Herausfallens aus dem Detektionsbereich", der in der vorliegenden Anmeldung für die Höhenbestimmung ausgenutzt wird (vgl. Anspruch 1), wertet die geometrischen Verhältnisse in diesem Zeitpunkt (Abstand beim Herausfallen proportional zur Höhe) aber nicht aus.

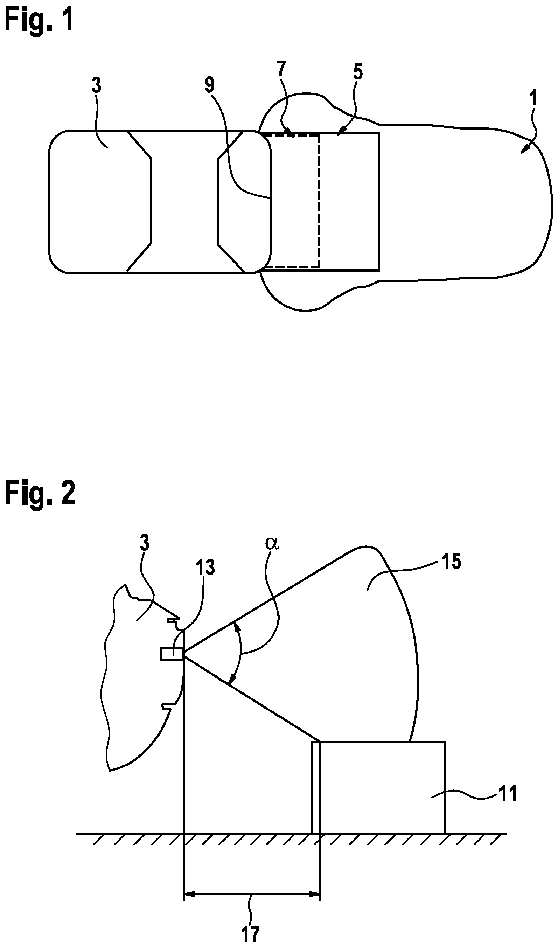

US 2009 / 108184 A1 offenbart für ein Lidar oder einen Laser-Distanz-Sensor zum Detektieren und Unterscheiden von Eindringlingen das Messprinzip der Höhenbestimmung durch Detektion des Austrittsabstands des Objekts aus dem Erfassungsbereich, siehe insbesondere [0053-0058] mit Fig. 1, 4, 5. Bei bestimmter (gemessener Winkelstellung θ) wird die Objekthöhe X aus dem zuletzt gemessenen Abstand I des Objekts (bevor es aus dem Erfassungsbereich tritt) bestimmt. Dabei bewegt sich das Objekt in den Erfassungsbereich hinein und aus diesem wieder heraus.

### Offenbarung der Erfindung

### Vorteile der Erfindung

Ein erfindungsgemäßes Verfahren zur Erkennung von Objekten mit geringer Höhe mit einem System zur Hinderniserkennung in Fahrzeugen, wobei das System zur Hinderniserkennung Abstandssensoren zur Ermittlung des Abstandes zu Objekten und Mittel zur Auswertung umfasst, umfasst die Schritte gemäß Anspruch 1.

Durch das erfindungsgemäße Verfahren werden Objekte, die während der Annäherung aus dem Detektionsbereich der Abstandssensoren verschwinden, als Objekte mit geringer Höhe erfasst. Anders als bei Systemen, wie sie aus dem Stand der Technik bekannt sind, wird hierdurch vermieden, dass das Objekt sowohl aus dem Detektionsbereich als auch aus dem Bereich für den Fahrer verschwindet. Der Fahrer kann über die Annäherung an ein Objekt mit geringer Höhe gewarnt werden.

Um zu prüfen, ob das Objekt beim Annähern an das Fahrzeug aus dem Detektionsbereich der Abstandssensoren verschwindet, werden vorzugsweise jeweils mindestens zwei aufeinander folgende Messungen zum Erfassen des Abstandes zu einem Objekt miteinander verglichen. Um jeweils mindestens zwei aufeinander folgende Messungen zum Erfassen des Abstandes zu einem Objekt miteinander vergleichen zu können, werden jeweils die aktuell erfassten Daten nach dem Vergleich mit den zuvor erfassten Daten in einem Speicher abgelegt. Bei einer nachfolgenden Messung können dann die mit der nachfolgenden Messung erfassten Daten mit den im Speicher abgelegten Daten verglichen werden. Die abgelegten Daten können dabei jeweils die zuvor abgelegten Daten überschreiben, da auf diese nicht weiter zurückgegriffen werden muss, wenn nur zwei aufeinander folgende Messungen miteinander verglichen werden. Wenn mehr als zwei aufeinander folgende Messungen miteinander verglichen werden, ist es zum Beispiel möglich, jeweils zusammen mit den erfassten Daten den Zeitpunkt der Erfassung zu speichern. Auch in diesem Fall können die Daten dann jeweils sequentiell mit den neu erfassten Daten überschrieben werden, wobei jeweils die ältesten Daten mit den neu erfassten Daten überschrieben werden. Durch die Angabe des Zeitpunktes der Erfassung lässt sich so eine eindeutige Zuordnung der jeweils gespeicherten Daten treffen. Alternativ kann anstelle des Zeitpunktes der Erfassung zum Beispiel auch eine laufende Nummer oder eine beliebige andere Kennung abgespeichert werden, um die erfassten und gespeicherten Daten einer konkreten Messung zuordnen zu können.

Um zu prüfen, ob ein Objekt beim Annähern an das Fahrzeug aus dem Detektionsbereich der Abstandssensoren verschwindet, ist im Allgemeinen jedoch der Vergleich von zwei aufeinander folgenden Messungen ausreichend, so dass zum Vergleich zweier aufeinander folgender Messungen jeweils Daten zumindest der der aktuellen Messung unmittelbar vorausgehenden Messung gespeichert werden.

Als Abstandssensoren, mit denen der Abstand zu Objekten ermittelt werden kann, können zum Beispiel Ultraschallsensoren, Radarsensoren oder kapazitive Sensoren eingesetzt werden. Die Sensoren sind dabei die üblicherweise in bereits bekannten Systemen zur Einparkunterstützung eingesetzten Sensoren.

Wenn ein Objekt aus dem Detektionsbereich verschwindet, wird davon ausgegangen, dass es sich hierbei um ein Objekt mit geringer Höhe handelt, wobei nicht ausgeschlossen werden kann, dass das Fahrzeug bei einer weiteren Annäherung an das Objekt mit diesem kollidieren kann oder auf das Objekt aufsitzen kann. Aus diesem Grund wird vorzugsweise an den Fahrer des Fahrzeugs eine Warnung ausgegeben oder das Fahrzeug wird automatisch angehalten, sobald das Objekt aus dem Detektionsbereich verschwindet. Die Warnung, die an den Fahrer ausgegeben wird, ist dabei zum Beispiel die gleiche Warnung, die auch ausgegeben wird, wenn eine Mindestdistanz zu einem Objekt, das eine größere Höhe aufweist, ausgegeben wird. Die Warnung erfolgt dabei vorzugsweise in dem Augenblick, wenn das Objekt aus dem Detektionsbereich verschwindet. Dies führt jedoch dazu, dass die Warnung in einem größeren Abstand ausgegeben wird als die Mindestdistanz bei einem Objekt mit größerer Höhe.

Das erfindungsgemäße Verfahren zur Unterstützung eines Fahrers eines Fahrzeugs bei einem Fahrmanöver umfasst folgende Schritte:
(i) Erfassen der seitlichen Umgebung des Fahrzeuges während der Vorbeifahrt und Ermitteln, ob eine geeignete Parklücke vorliegt,
(ii) Berechnen einer Einparktrajektorie in die Parklücke, wobei die Einparktrajektorie so berechnet wird, dass zu einer detektierten seitlichen Begrenzung der Parklücke ein ausreichend großer Abstand gehalten wird, und Führen des Fahrzeugs entlang der Einparktrajektorie in die Parklücke durch automatisches Steuern des Fahrzeugs oder durch Übermittlung von Lenkanweisungen an den Fahrer des Fahrzeugs,
(iii) Erfassen der Umgebung des Fahrzeugs während des Einparkens,
(iv) Berechnen einer geänderten Einparktrajektorie, die ein Überfahren der seitlichen Begrenzung erlaubt, wenn die seitliche Begrenzung eine Höhe aufweist, die ein Überfahren mit Karosserieteilen erlaubt.

Erfindungsgemäß erfolgt das Erfassen der Umgebung des Fahrzeugs während des Einparkens unter dem Einsatz des vorstehend beschriebenen Verfahrens zur Erkennung von Objekten mit geringer Höhe.

Durch den Einsatz des Verfahrens zur Erkennung von Objekten mit geringer Höhe ist es möglich, eine optimale Führung des Fahrzeugs in die Parklücke zu ermöglichen. So ist es zum Beispiel möglich, mit einem Zug in eine kürzere Parklücke einzuparken, wenn ein Überfahren einer seitlichen Begrenzung, beispielsweise eines Bordsteines möglich ist. Wenn die seitliche Begrenzung durch ein hohes Objekt, beispielsweise eine Wand gebildet wird, muss die Einparktrajektorie derart berechnet werden, dass keine Kante des Fahrzeuges mit dem Objekt kollidiert. Ein Überfahren ist in diesem Fall nicht möglich. Dies hat gegenüber den bekannten Systemen den Vorteil, dass es nicht notwendig ist, die seitliche Begrenzung der Parklücke immer als hohes Objekt, beispielsweise als Wand zu betrachten und entsprechend einen großen Sicherheitsabstand zur seitlichen Begrenzung der Parklücke vorzusehen.

Das Fahrmanöver, bei dem der Fahrer des Fahrzeugs unterstützt wird, ist im Allgemeinen ein Einparkmanöver in eine Parklücke, vorzugsweise ein Einparkmanöver in eine Parallelparklücke.

Da ein Überfahren eines Objektes mit geringer Höhe nur bis zu einer bestimmten Höhe des Objektes möglich ist, ohne dass das Fahrzeug beschädigt wird, zum Beispiel indem das Fahrzeug auf dem Objekt aufsitzt, ist es notwendig, neben dem Abstand zu dem Objekt mit geringer Höhe auch die Höhe dieses Objektes zu bestimmen. Hierzu ist es zum Beispiel möglich, die Höhe des Objektes mit geringer Höhe, beispielsweise der seitlichen Begrenzung einer Parallelparklücke, die ein Überfahren mit Karosserieteilen erlaubt, durch den Abstand vorzugeben, bei dem das Objekt aus dem Detektionsbereich des Abstandssensors verschwindet. Der Detektionsbereich des Abstandssensors, beispielsweise eines Ultraschallsensors, wird durch den vom Sensor gesendeten Schallkegel vorgegeben. Ein Objekt mit einer bestimmten Höhe tritt erst bei einem bestimmten Abstand in den Erfassungsbereich des Sensors ein. Durch den Abstand, bei dem das Objekt aus dem Erfassungsbereich des Sensors verschwindet, lässt sich so eindeutig die Höhe des Objektes bestimmen. Wenn der Abstand zum Objekt einen Mindestabstand unterschreitet, ist das detektierte Objekt mit geringer Höhe so hoch, dass ein gefahrloses Überfahren nicht mehr möglich ist. Bei einem Abstand der größer ist als ein vorgegebener Mindestabstand, zu dem das Objekt aus dem Erfassungsbereich verschwindet, ist die Höhe des Objektes so gering, dass ein gefahrloses Überfahren möglich ist.

Üblicherweise wird eine Parallelparklücke seitlich durch einen Bordstein begrenzt. Jedoch ist es auch möglich, dass die seitliche Begrenzung durch andere niedrige Objekte, beispielsweise Ketten oder Pfosten gebildet wird. Das Objekt mit geringer Höhe wird vorzugsweise dann als Bordstein identifiziert, wenn bei einer schrägen Anfahrt auf das Objekt zu weiter vom Objekt entfernte Abstandssensoren das Objekt noch detektieren und Abstandssensoren, die einen geringeren Abstand zum Objekt aufweisen, das Objekt nicht mehr erfassen. Durch die Erfassung durch Sensoren, die weiter vom Objekt entfernt sind und das nicht mehr Erfassen des Objektes durch Sensoren, die näher am Objekt liegen, lässt sich auf ein ausgedehntes Objekt schließen. Bei einer Parklücke ist dies üblicherweise ein Bordstein. Die Höhe des Bordsteins lässt sich dabei aus dem Abstand ermitteln, bei dem das Objekt aus dem Erfassungsbereich der Sensoren verschwindet. Wenn der Bordstein eine Höhe aufweist, die ein gefahrloses Überfahren ermöglicht, kann dann die Einparktrajektorie entsprechend berechnet werden.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung des Verfahrens zur Erkennung von Objekten mit geringer Höhe,
- Figur 2: den Erfassungsbereich eines Sensors, mit dem ein Objekt mit geringer Höhe erfasst werden kann,
- Figur 3: eine Darstellung eines Einparkvorganges in Draufsicht.

### Ausführungsbeispiele der Erfindung

In Figur 1 ist ein Verfahren zur Erkennung von Objekten mit geringer Höhe schematisch dargestellt.

Zur Erkennung eines Objektes mit geringer Höhe, beispielsweise eines Objektes, das unter einem Fahrzeug durchtauchen kann, wobei das Fahrzeug das Objekt überfahren kann, werden zum Beispiel innerhalb eines Detektorsichtfeldes 1, beispielsweise einem Sichtfeld von Ultraschallsensoren, die als Abstandssensoren an einem Fahrzeug 3 montiert sind, zwei Bereiche definiert. Ein erster, größerer Bereich 5 wird innerhalb des Detektorsichtfeldes 1 so definiert, dass ein Objekt mit geringer Höhe noch sicher erkannt werden kann. Ein zweiter, kleinerer Bereich 7 wird so definiert, dass ein Detektionsverlust eines Objektes bis zu einer bestimmten Höhe erwartet wird. Der Detektionsverlust des Objektes im zweiten Bereich 7 ergibt sich dabei dadurch, dass das Objekt aus dem vom Abstandssensor gesendeten Signalkegel beispielsweise den Schallkegel eines Ultraschallsensors, verschwindet.

Um zu erfassen, ob ein Objekt, das von den Abstandssensoren erfasst wird, ein Objekt mit geringer Höhe ist, wird zunächst eine Annäherung des Objektes im ersten Bereich 5 beobachtet. Der erste Bereich 5 wird dabei vorzugsweise, wie in Figur 1 dargestellt, auf einen bestimmten Abstand zur hinteren Begrenzung 9 des Fahrzeugs 3 begrenzt. Die hintere Begrenzung 9 wird dabei üblicherweise durch einen Stoßfänger gebildet. Gleichzeitig wird der erste Bereich 5 auch auf eine vorgegebene Breite begrenzt. Die vorgegebene Breite des ersten Bereichs 5 entspricht dabei zum Beispiel der Fahrzeugbreite.

Wenn nun innerhalb des ersten Bereichs 5 ein Objekt identifiziert wird, dem sich das Fahrzeug nähert, zum Beispiel indem der detektierte Abstand des Fahrzeugs 3 zum Objekt sich um ein bestimmtes Mindestmaß verringert hat, wird in einem weiteren Schritt beobachtet, ob die Detektion des betreffenden Objektes innerhalb des zweiten Bereichs 7, der eine kürzere Entfernung zur hinteren Begrenzung 9 des Fahrzeugs aufweist, verschwindet. Wenn das Objekt bei Eintritt in den zweiten Bereich 7 verschwindet, wird auf ein Objekt mit geringer Höhe, welches unter dem Fahrzeug durchtauchen kann, geschlossen. Um das Objekt verfolgen zu können, ist es zum Beispiel möglich, jeweils die erfassten Daten in einem Speicher abzulegen und mit den Daten einer nachfolgenden Messung zu vergleichen. Hierzu werden üblicherweise mindestens zwei aufeinander folgende Messungen miteinander verglichen. Es ist jedoch auch der Vergleich von mehr als zwei aufeinander folgenden Messungen möglich. In diesem Fall müssen, wie vorstehend bereits erläutert, jeweils die zuvor erfolgten Messdaten in einem geeigneten Speicher abgelegt werden. Das Ablegen der Daten erfolgt dabei so, dass eine eindeutige Zuordnung zu einem bestimmten Messzeitpunkt möglich ist. Auf diese Weise lässt sich der Weg des Objektes zum Fahrzeug 3 nachverfolgen.

Wenn ein im ersten Bereich 5 detektiertes Objekt im zweiten Bereich 7 nicht mehr detektiert wird, wird zum Beispiel eine Warnung an den Fahrer des Fahrzeugs 3 ausgegeben. Die Warnung kann dabei zum Beispiel dieselbe sein, wie sie auch bei Unterschreitung eines Mindestabstandes zu einem höheren Objekt ausgegeben wird. Eine solche Warnung ist zum Beispiel das Senden eines Dauertones.

Neben der Ausgabe einer Warnung an den Fahrer ist es alternativ auch möglich, wenn das System es zulässt, das Fahrzeug automatisch anzuhalten, wenn das Objekt im zweiten Bereich 7 aus dem Detektionsbereich des Abstandssensors verschwindet. Dies ist zum Beispiel dann sinnvoll, wenn das Verfahren zum Erkennen von Objekten geringer Höhe bei einem vollautomatischen Einparksystem, bei dem sowohl die Längsführung als auch die Lenkführung vom System übernommen wird, eingesetzt wird.

In Figur 2 ist der Erfassungsbereich eines Sensors mit dem ein Objekt mit geringer Höhe erfasst werden kann, dargestellt.

Um ein Objekt 11 zu erfassen, wird von einem Abstandssensor, beispielsweise einem Ultraschallsensor 13 ein Signal ausgesendet. Das Signal wird vom Objekt 11 reflektiert und das reflektierte Echo vom Sensor empfangen. Das ausgesendete Signal breitet sich üblicherweise in Form einer Schallkeule 15 aus. Aufgrund der Ausbreitung des Signals in Form der Schallkeule 15 wird ein Objekt 11, das nur eine geringe Höhe aufweist, erst in einem bestimmten Abstand 17 vom Sensor 13 erfasst. Wenn der Abstand 17 unterschritten wird, befindet sich das Objekt 11 mit geringer Höhe nicht mehr im Erfassungsbereich des Sensors. Je nach Höhe des zu detektierenden Objektes 11 und dem Öffnungswinkel α der Schallkeule 15 variiert der Abstand 17, bei dem das Objekt 11 nicht mehr vom Sensor 13 erfasst wird. Je kleiner der Öffnungswinkel α ist und je niedriger das Objekt 11 ist, umso größer ist der Abstand 17 vom Sensor 13 zum Objekt 11, bei dem das Objekt 11 aus dem Erfassungsbereich des Sensors 13 verschwindet. Auf diese Weise lässt sich aus dem Abstand 17, bei dem das Objekt 11 aus dem Erfassungsbereich des Sensors 13 verschwindet, auf die Höhe des Objektes schließen. Bei Objekten bis zu einer vorgegebenen Maximalhöhe kann dann auf eine Warnung des Fahrers verzichtet werden, da ein gefahrloses Überfahren des Objektes 11 möglich ist. Sobald jedoch die Maximalhöhe des Objektes 11 überschritten wird, wird zum Beispiel eine Warnung an den Fahrer ausgegeben, damit dieser das Fahrzeug rechtzeitig anhalten kann, um so eine Kollision mit dem Objekt 11 zu vermeiden.

Neben der Erfassung der Höhe des Objektes lässt sich bei Einsatz von mehreren Sensoren, wie dies im Allgemeinen üblich ist, auch eine Objekttyp-Klassifizierung durchführen, bei der zwischen punktförmigen Objekten, beispielsweise Pfosten, und ausgedehnten Objekten wie Wänden oder Bordsteinen unterschieden wird. Bei ausgedehnten Objekten wird darüber hinaus auch identifiziert, ob sich diese schräg oder gerade vor bzw. hinter dem Fahrzeug befinden.

Wenn ein als ausgedehntes Objekt identifiziertes Hindernis während einer Annäherung des Fahrzeuges 3 komplett oder zumindest einseitig aus dem Detektionsbereich des Sensors 13 verschwindet, das heißt von den Sensoren, die sich am nächsten zum Hindernis befinden, nicht mehr detektiert wird, während es von Sensoren, die einen größeren Abstand zum Objekt aufweisen, das Objekt noch detektiert wird, wird von einem Bordstein ausgegangen.

Insbesondere bei einem Einparken in eine Parallelparklücke wird schräg an ein Objekt herangefahren, so dass das vorstehend beschriebene Verfahren angewandt werden kann.

Ein Einparkvorgang in eine Parallelparklücke ist in Draufsicht in Figur 3 dargestellt.

Beim Einparken in eine Parallelparklücke 19 wird während des Einfahrens die Umgebung von Sensoren im Heckbereich des Fahrzeugs 3 erfasst. Zur Erfassung wird von den einzelnen Sensoren im Heckbereich jeweils ein Signal ausgesendet und das Echo des Signals empfangen. Zusätzlich zu dem selbst ausgesandten Signal können die Sensoren auch von benachbarten Sensoren gesendete Signale empfangen. Aus den so empfangenen Signalen kann die Umgebung des Fahrzeugs abgebildet werden. Als Objekte, die von den Sensoren erfasst werden, wird ab einer bestimmten Entfernung auch ein Bordstein 21 identifiziert. Neben dem Bordstein erfassen die Abstandssensoren auch Entfernungen zum Beispiel zu weiteren Fahrzeugen 23, von denen die Parklücke zum Beispiel vorne und hinten begrenzt ist.

Der Bordstein 21 ist dabei ein Objekt mit geringer Höhe, wohingegen ein Fahrzeug 23 ein Objekt mit einer größeren Höhe darstellt und üblicherweise nicht aus dem Erfassungsbereich eines Sensors verschwindet. Der Bordstein 21 verschwindet jedoch im Allgemeinen aus dem Erfassungsbereich der Sensoren, sobald ein Mindestabstand zum Bordstein 21 unterschritten worden ist.

Zur Berechnung einer geeigneten Einparktrajektorie wird vorzugsweise, um eine Kollision auf jeden Fall zu verhindern, zunächst von einer Wand als seitlicher Begrenzung der Parallelparklücke 19 ausgegangen. Die Einparktrajektorie wird dann mit einem entsprechend ausreichenden Sicherheitsabstand zu einer solchen potentiellen Wand geplant. Ein Fahrschlauch, wie er sich ergibt, wenn die Einparktrajektorie mit einem entsprechend großen Abstand zur seitlichen Begrenzung der Parklücke 19 geplant wird, ist in Figur 3 dargestellt und mit Bezugszeichen 25 bezeichnet.

Von den Abstandssensoren im Heckbereich des Fahrzeugs 3 gesendete und empfangene Signale sind durch Pfeile dargestellt. Dabei bezeichnen Doppelpfeile 27 Direktechos und einfache Pfeile 29 Kreuzechos. Als Direktecho wird dabei ein Signal bezeichnet, welches vom Sensor ausgesendet und vom selben Sensor wieder empfangen wird, wohingegen ein Kreuzecho ein Signal ist, das von einem Sensor gesendet wird und dessen Echo von einem anderen Sensor empfangen wird.

Während des Einparkvorganges wird nun kontinuierlich die Umgebung des Fahrzeuges 3 erfasst. Wenn während des Einparkmanövers die seitliche Begrenzung 21, die in der hier dargestellten Ausführungsform ein Bordstein ist, aus dem Erfassungsbereich der Sensoren verschwindet, wird die seitliche Begrenzung als eine solche Begrenzung eingestuft, die vom Fahrzeug überfahren werden kann. In diesem Fall wird die Einparktrajektorie neu berechnet und der Einparkvorgang wird entsprechend der geänderten Einparktrajektorie fortgesetzt. Dies ermöglicht ein dichteres Heranfahren an die seitliche Begrenzung 21 der Parklücke. Zudem kann auf diese Weise unter Umständen ein weiterer Rangierzug zum Einparken des Fahrzeugs vermieden werden.

## Patentansprüche

1. Verfahren zur Erkennung von Objekten (11) mit geringer Höhe mit einem System zur Hinderniserkennung in Fahrzeugen (3), wobei das System zur Hinderniserkennung als Abstandssensoren (13) Ultraschallsensoren oder Radarsensoren zur Ermittlung des Abstandes zu Objekten (11) und Mittel zur Auswertung umfasst, folgende Schritte umfassend:
(a) Kontinuierliches Erfassen des Abstandes zu einem Objekt (11) mittels der Abstandssensoren (13) oder Erfassen des Abstandes zu einem Objekt (11) in vorgegebenen Intervallen,
(b) Prüfen, ob das Objekt (11) beim Annähern an das Fahrzeug (3) bei Unterschreiten eines vorgegebenen Abstandes von den Abstandssensoren (13) weiter erfasst wird oder aus dem Detektionsbereich der Abstandssensoren (13) verschwindet,
(c) Erkennen des Objekts (11), das aus dem Detektionsbereich der Abstandssensoren (13) verschwindet, als Objekt (11) mit geringer Höhe,
wobei zum Prüfen, ob das Objekt (11) beim Annähern an das Fahrzeug (3) aus dem Detektionsbereich der Abstandssensoren (13) verschwindet, jeweils mindestens zwei aufeinander folgende Messungen zum Erfassen des Abstandes zu einem Objekt (11) miteinander verglichen werden **dadurch gekennzeichnet, dass** aus dem Abstand, bei dem das Objekt aus dem Erfassungsbereich der Abstandssensoren (13) verschwindet, auf die Höhe des Objekts (11) geschlossen wird.

2. Verfahren gemäß Anspruch 1, **dadurch gekennzeichnet, dass** zum Vergleich zweier aufeinander folgender Messungen Daten zumindest der der aktuellen Messung unmittelbar vorausgehenden Messung gespeichert werden.

3. Verfahren gemäß einem der Ansprüche 1 bis 2, **dadurch gekennzeichnet, dass** an den Fahrer des Fahrzeugs (3) eine Warnung ausgegeben wird oder das Fahrzeug (3) automatisch angehalten wird, wenn das Objekt (11) aus dem Detektionsbereich verschwindet.

4. Verfahren zur Unterstützung eines Fahrers eines Fahrzeuges bei einem Fahrmanöver, folgende Schritte umfassend:
(i) Erfassen der seitlichen Umgebung des Fahrzeuges (3) während der Vorbeifahrt und Ermitteln, ob eine geeignete Parklücke (19) vorliegt,
(ii) Berechnen einer Einparktrajektorie in die Parklücke (19), wobei die Einparktrajektorie so berechnet wird, dass zu einer detektierten seitlichen Begrenzung (21) der Parklücke (19) ein ausreichend großer Abstand gehalten wird, und Führen des Fahrzeugs (3) entlang der Einparktrajektorie in die Parklücke (19) durch automatisches Steuern des Fahrzeugs (3) oder durch Übermittlung von Lenkanweisungen an den Fahrer des Fahrzeugs (3),
(iii) Erfassen der Umgebung des Fahrzeugs während des Einparkens unter Einsatz des Verfahrens zur Erkennung von Objekten mit geringer Höhe gemäß einem der Ansprüche 1 bis 3,
(iv) Berechnen einer geänderten Einparktrajektorie, die ein Überfahren der seitlichen Begrenzung erlaubt, wenn die seitliche Begrenzung (21) eine Höhe aufweist, die ein Überfahren mit Karosserieteilen erlaubt.

5. Verfahren gemäß Anspruch 4 **dadurch gekennzeichnet, dass** das Fahrmanöver ein Einparkmanöver in eine Parklücke (19) ist.

6. Verfahren gemäß Anspruch 5, **dadurch gekennzeichnet, dass** die Parklücke (19) eine Parallelparklücke ist.

7. Verfahren gemäß einem der Ansprüche 4 bis 6, **dadurch gekennzeichnet, dass** die Höhe des Objektes (11), die ein Überfahren mit Karosserieteilen erlaubt, durch den Abstand vorgegeben wird, bei dem das Objekt (11) aus dem Detektionsbereich des Abstandssensors (13) verschwindet.

8. Verfahren gemäß einem der Ansprüche 4 bis 7, **dadurch gekennzeichnet, dass** das Objekt (11) geringer Höhe als Bordstein (21) identifiziert wird, wenn bei einer schrägen Anfahrt auf das Objekt (11) zu weiter vom Objekt (11) entfernte Abstandssensoren (13) das Objekt (11) noch detektieren und Abstandssensoren (13), die einen geringeren Abstand zum Objekt (11) aufweisen, das Objekt (11) nicht mehr erfassen.

## Claims

1. Method for recognizing objects (11) of low height using an obstacle recognition system in vehicles (3), wherein the obstacle recognition system comprises ultrasonic sensors or radar sensors as distance sensors (13) for determining the distance to objects (11) and evaluation means, comprising the following steps of:
(a) continuously capturing the distance to an object (11) by means of the distance sensors (13) or capturing the distance to an object (11) at predefined intervals,
(b) checking whether the object (11) continues to be captured by the distance sensors (13) when approaching the vehicle (3), if a predefined distance is undershot, or disappears from the detection range of the distance sensors (13),
(c) recognizing the object (11) which disappears from the detection range of the distance sensors (13) as an object (11) of low height,
wherein, in order to check whether the object (11) disappears from the detection range of the distance sensors (13) when approaching the vehicle (3), at least two successive measurements for capturing the distance to an object (11) are each compared with one another, **characterized in that** the height of the object (11) is inferred from the distance at which the object disappears from the capture range of the distance sensors (13).

2. Method according to Claim 1, **characterized in that**, in order to compare two successive measurements, data from at least the measurement immediately preceding the current measurement are stored.

3. Method according to one of Claims 1 to 2, **characterized in that** a warning is output to the driver of the vehicle (3) or the vehicle (3) is automatically stopped if the object (11) disappears from the detection range.

4. Method for assisting a driver of a vehicle during a driving manoeuvre, comprising the following steps of:
(i) capturing the lateral environment of the vehicle (3) while the vehicle drives past and determining whether there is a suitable parking space (19),
(ii) calculating a trajectory for parking in the parking space (19), wherein the parking trajectory is calculated in such a manner that a sufficiently large distance to a detected lateral boundary (21) of the parking space (19) is retained, and guiding the vehicle (3) along the parking trajectory into the parking space (19) by automatically controlling the vehicle (3) or by transmitting steering instructions to the driver of the vehicle (3),
(iii)capturing the environment of the vehicle during parking using the method for recognizing objects of low height according to one of Claims 1 to 3,
(iv) calculating a changed parking trajectory which allows the lateral boundary to be driven over if the lateral boundary (21) has a height which allows vehicle body parts to drive over it.

5. Method according to Claim 4, **characterized in that** the driving manoeuvre is a manoeuvre of parking in a parking space (19).

6. Method according to Claim 5, **characterized in that** the parking space (19) is a parallel parking space.

7. Method according to one of Claims 4 to 6, **characterized in that** the height of the object (11) which allows vehicle body parts to drive over it is predefined by the distance at which the object (11) disappears from the detection range of the distance sensor (13).

8. Method according to one of Claims 4 to 7, **characterized in that** the object (11) of low height is identified as a kerb (21) if, in the case of an oblique approach to the object (11), distance sensors (13) further away from the object (11) still detect the object (11) and distance sensors (13) which are at a shorter distance from the object (11) no longer capture the object (11).

## Revendications

1. Procédé de reconnaissance d'objets (11) ayant une faible hauteur avec un système de reconnaissance d'obstacle dans des véhicules (3), le système de reconnaissance d'obstacle comprenant en tant que détecteurs de distance (13) des détecteurs à ultrasons ou des détecteurs radar servant à déterminer la distance par rapport à des objets (11) et des moyens d'interprétation, comprenant les étapes suivantes :
(a) détection continue de la distance par rapport à un objet (11) au moyen des détecteurs de distance (13) ou détection de la distance par rapport à un objet (11) à des intervalles prédéfinis,
(b) vérification du fait de savoir si l'objet (11), lors de l'approche vers le véhicule (3), est toujours détecté par les détecteurs de distance (13) lors du passage au-dessous d'une distance prédéfinie ou s'il disparaît de la plage de détection des détecteurs de distance (13),
(c) reconnaissance de l'objet (11) qui disparaît de la plage de détection des détecteurs de distance (13) comme un objet (11) ayant une faible hauteur,
la vérification du fait de savoir si l'objet (11), lors de l'approche vers le véhicule (3), disparaît de la plage de détection des détecteurs de distance (13) s'effectuant en comparant respectivement entre elles au moins deux mesures successives destinées à détecter la distance par rapport à un objet (11),
**caractérisé en ce que**
la hauteur de l'objet (11) est déduite de la distance à laquelle l'objet disparaît de la plage de détection des détecteurs de distance (13).

2. Procédé selon la revendication 1, **caractérisé en ce que** pour la comparaison de deux mesures successives, les données d'au moins la mesure qui précède directement la mesure actuelle sont mémorisées.

3. Procédé selon l'une des revendications 1 et 2, **caractérisé en ce qu'**un avertissement est émis à l'attention du conducteur du véhicule (3) ou le véhicule (3) est arrêté automatiquement lorsque l'objet (11) disparaît de la plage de détection.

4. Procédé d'assistance d'un conducteur d'un véhicule lors d'une manoeuvre de conduite, comprenant les étapes suivantes :
(i) détection de l'environnement latéral du véhicule (3) pendant le passage à côté et détermination du fait de savoir s'il existe un emplacement de stationnement (19) adapté,
(ii) calcul d'une trajectoire d'entrée en stationnement dans l'emplacement de stationnement (19), la trajectoire d'entrée en stationnement étant calculée de telle sorte qu'une distance suffisamment grande est maintenue par rapport à une délimitation latérale (21) détectée de l'emplacement de stationnement (19), et guidage du véhicule (3) le long de la trajectoire d'entrée en stationnement dans l'emplacement de stationnement (19) par commande automatique du véhicule (3) ou par communication d'instructions de direction au conducteur du véhicule (3),
(iii) détection de l'environnement du véhicule pendant l'entrée en stationnement en utilisant le procédé de reconnaissance d'objets ayant une faible hauteur selon l'une des revendications 1 à 3,
(iv) calcul d'une trajectoire d'entrée en stationnement modifiée qui autorise un franchissement de la délimitation latérale si la délimitation latérale (21) présente une hauteur qui autorise un franchissement avec des parties de la carrosserie.

5. Procédé selon la revendication 4, **caractérisé en ce que** la manoeuvre de conduite est une manoeuvre d'entrée en stationnement dans un emplacement de stationnement (19) .

6. Procédé selon la revendication 5, **caractérisé en ce que** l'emplacement de stationnement (19) est un emplacement de stationnement en créneau.

7. Procédé selon l'une des revendications 4 à 6, **caractérisé en ce que** la hauteur de l'objet (11) qui autorise un franchissement avec des parties de la carrosserie est prédéfinie par la distance à laquelle l'objet (11) disparaît de la plage de détection du détecteur de distance (13).

8. Procédé selon l'une des revendications 4 à 7, **caractérisé en ce que** l'objet (11) de faible hauteur est identifié comme une bordure de trottoir (21) si, lors d'une approche en biais de l'objet (11), des détecteurs de distance (13) plus éloignés de l'objet (11) détectent encore l'objet (11) et les détecteurs de distance (13) qui présente une distance plus faible par rapport à l'objet (11) ne détectent plus l'objet (11).
